# EUROPEAN PATENT SPECIFICATION

(11) **EP 3 750 721 B1**
(45) Date of publication and mention of the grant of the patent: **23.02.2022**
(21) Application number: 20177887.5
(22) Date of filing: 02.06.2020
(51) Int. Cl.: B60C 9/20, B60C 9/18, B60C 11/00

(54) **TIRE AND RADIAL AICRAFT TIRE**
REIFEN UND RADIALER LUFTREIFEN
PNEU ET PNEU D'AVION RADIAL

(30) Priority: 11.06.2019 US 201916437749
(43) Date of publication of application: 16.12.2020
(73) Proprietor: The Goodyear Tire & Rubber Company, Akron, OH 44316 (US)
(72) Inventor: UEYOKO, Kiyoshi, Copley, OH 44321 (US)
(74) Representative: Goodyear IP Law

(56) References cited:
- EP-A1- 1 477 333
- EP-A2- 1 800 905
- JP-A- 2011 121 439
- US-A- 4 934 428

## Description

### Field of the Invention

The present invention relates to a tire, preferably a radial aircraft tire, and a method of producing the tire and, more particularly, to a radial tire and a method of producing the radial tire. In a preferred aspect, the tire is suitable for an aircraft. It allows mitigating cutting of such tire by a foreign object and allows it to reduce weight of the tire.

### Background of the Invention

Conventional radial tires, especially aircraft radial tires, often have a large growth of a tread surface in their radial direction by high internal pressure and centrifugal force caused by high speed rotation. If the tread surface grows outward in the radial direction, tread rubber is expanded in a circumferential direction of the tire. If the conventional tire is non-pneumatic, the large growth may be caused by only the high-speed rotation.

Generally, conventional aircraft radial tires are used under conditions of high internal pressure, high load, and high speed. Therefore, when the tire rides over foreign object, the aircraft radial tire may be damaged when the entire tire rides over the foreign object, e.g., so-called "enveloping properties". When the tread rubber of the tire is expanded in the circumferential direction, a resistance force against the foreign object may be weak. Further, such trampled foreign object may easily enter the tread and thereby damage the tire.

When an amount of growth of the central portion of the tire in its widthwise direction becomes greater than opposite ends of the tire in the widthwise direction, a diameter difference of the tire may be generated. This diameter difference may cause a drag phenomenon to the rotating tire. As a result, the shoulder portion of the tread may wear sooner than the central portion of the tread thereby shortening the life of the tread and the tire. This phenomenon is called deviated wear.

In order to improve the wearing characteristics of the tread by suppressing the growing deformation thereof, to enhance the wearing characteristics of the tread, and to enhance the enveloping properties of the tread, a conventional radial tire may include a belt layer disposed between a tread rubber layer and a crown region of a carcass layer. The belt layer may include a conventional main belt layer with a wide belt ply and a narrower auxiliary belt layer with a narrower belt ply added on a radially outer periphery of the main belt layer. This structure may thus enhance belt rigidity with the auxiliary belt layer disposed on a central portion of the main belt layer. Further, this structure may restrain growing deformation of the tread central region. One conventional structure for reducing growth use of a cord with relatively high elasticity made of aromatic polyamide (e.g., Kevlar ^{™}). As compared with an aliphatic polyamide (e.g., Nylon), which is conventionally used for an aircraft tire, the aromatic polyamide cord may exhibit high tension in a low elongation percentage region and maintain the internal pressure of the tire, thereby effectively suppressing the growth of the tire.

Conventionally, reinforcing layers may include cords reinforced by glass, metal, aramid, or the like provided at an outermost layer of a belt made of organic fiber. A belt ply having higher tension may further be added. Such a layer may necessarily use a rubber thickness (thickness of rubber only with thickness of cord not included) in the tread central region where the total thickness of the belt layer becomes most thick. Rubber thickness of the tread side regions may thereby become excessively thick, thus, increasing the tire weight, increasing the heating of the tread side regions, and lowering the high-speed endurance of the tread.

In view of the above, it is an object of the present invention to provide a tire suitable for an aircraft in which a diameter of the tread surface is prevented from being increased during rotation, endurance against cutting occurred by foreign object or the like is enhanced, and the weight of the tire is reduced. Also, the tire should have good retreading properties.

EP 1 800 905 A2 describes a tread for an aircraft tire with a center rib having a first radius of curvature and shoulder ribs having a second radius of curvature that is greater than the first radius,

JP 2011 121 439 A describes an aircraft tire having a belt structure with an inner main belt layer, an unreinforced cushion layer on top of the main belt layer, and a protective belt layer on the radially outer side of the cushion layer. The thickness of the cushion layer is in a range of 1.5 to 7.0 times the diameter of the cords in the main belt layer.

EP 1 477 333 A1 and US 4,934,428 describe further aircraft tires with belt structures.

### Definitions

"Axial" and "axially" refer to lines or directions that are parallel to the axis of rotation of the tire.

"Belt structure" means at least two annular layers or plies of preferably parallel cords, woven or unwoven, underlying the tread, unanchored to the bead, and having cords preferably inclined respect to the equatorial plane of the tire. The belt structure may also include plies of parallel cords inclined at relatively low angles, acting as restricting layers.

"Carcass" means the tire structure apart from the belt structure, tread, undertread, and sidewall rubber over the plies, but including the beads.

"Circumferential" and "circumferentially" mean lines or directions extending along the perimeter of the surface of the annular tire parallel to the equatorial plane (CL) and perpendicular to the axial direction; it can also refer to the direction of the sets of adjacent circular curves whose radii define the axial curvature of the tread, as viewed in cross section.

"Cord" means one of the reinforcement strands which a reinforcement structures of the tire comprises.

"Cord angle" means the acute angle, left or right in a plan view of the tire, formed by a cord with respect to the equatorial plane. The "cord angle" is measured in a cured but uninflated tire.

"Denier" means the weight in grams per 9000 meters (unit for expressing linear density).

"Dtex" means the weight in grams per 10,000 meters.

"Density" means weight per unit length.

"Equatorial plane (EP or CL)" means the plane perpendicular to the tire's axis of rotation and passing through the center of its tread; or the plane containing the circumferential centerline of the tread.

"Groove" means an elongated void area in a tread that may extend circumferentially or laterally about the tread in a straight, curved, or zigzag manner. Circumferentially and laterally extending grooves sometimes have common portions. The "groove width" may be the tread surface occupied by a groove or groove portion divided by the length of such groove or groove portion; thus, the groove width may be its average width over its length. Grooves may be of varying depths in a tire. The depth of a groove may vary around the circumference of the tread, or the depth of one groove may be constant but vary from the depth of another groove in the tire. If such narrow or wide grooves are of substantially reduced depth as compared to wide circumferential grooves, which they interconnect, they may be regarded as forming "tie bars" tending to maintain a rib-like character in the tread region involved. As used herein, a groove is intended to have a width large enough to remain open in the tires contact patch or footprint.

"Lateral" means an axial direction.

"Ply" means a cord-reinforced layer of rubber-coated radially deployed or otherwise parallel cords.

"Radial" and "radially" mean directions radially toward or away from the axis of rotation of the tire.

"Radial ply structure" means the one or more carcass plies or which at least one ply has reinforcing cords oriented at an angle of from 65° to 90° with respect to the equatorial plane of the tire.

"Radial ply tire" means a belted or circumferentially restricted pneumatic tire in which at least one ply has cords which extend from bead to bead are laid at cord angles of from 65° to 90° with respect to the equatorial plane of the tire.

"Rib" means a circumferentially extending strip of rubber on the tread which is defined by at least one circumferential groove and either a second such groove or a lateral edge, the strip being laterally undivided by full-depth grooves.

"Tread" means a molded rubber component which, when bonded to a tire casing, includes that portion of the tire that comes into contact with the road when the tire is normally inflated and under normal load.

### Summary of the Invention

The invention relates to a tire in accordance with claim 1.

Dependent claims refer to preferred embodiments of the invention.

A first radial tire in accordance to a preferred aspect of the present invention includes a pair of bead cores, a carcass layer having one or more carcass plies extending from one of the bead cores to another of the bead cores, a tread portion circumferentially encircling the toroidal form of the carcass layer, and a belt structure. The belt structure includes a radially innermost main belt layer, a first, unreinforced cushion layer disposed on a radially outer side of the main belt layer, a second, unreinforced cushion layer disposed on a radially outer side of the first cushion layer, and a protective belt layer disposed between a radially outer side of the second cushion layer and a radially inner side of the tread portion. A radially outermost layer of the main belt layer has reinforcement cords with a specified diameter. The first cushion layer has a radial thickness between 0.5 and 4.0 times the specified diameter.

According to another preferred aspect of the first radial tire, the first cushion layer has a radial thickness between 0.5 and 2.5 times the specified diameter.

According to still another preferred aspect of the first radial tire, the first cushion layer has an axial width between 0.5 and 1.1 times a maximum overall axial width of the belt structure.

According to yet another preferred aspect of the first radial tire, the first cushion layer has an axial width between 0.5 and 0.9 times a maximum overall axial width of the belt structure.

According to still another preferred aspect of the first radial tire, the second cushion layer has a radial thickness between 1.5 and 5.0 times the specified diameter.

According to yet another preferred aspect of the first radial tire, the second cushion layer has a radial thickness between 1.5 and 3.5 times the specified diameter.

According to still another preferred aspect of the first radial tire, the reinforcement cords of the radially outermost layer of the main belt layer have a plurality of organic fiber, merged cords.

According to yet another preferred aspect of the first radial tire, the protective belt layer has organic fiber cords.

According to still another preferred aspect of the first radial tire, the carcass layer has organic fiber cords.

According to yet another preferred aspect of the first radial tire, the main belt layer has a first axial width and the protective belt layer has a second axial width, a ratio of the second axial width to the first axial width being between 0.25 and 1.20, or between 0.75 and 0.95.

A tire or radial tire in accordance with the present invention includes a plurality of circumferentially extending tread grooves, one circumferentially extending center rib defined by two of the tread grooves, a radially outer surface of the center rib having a first radius of curvature, two circumferentially extending intermediate ribs defined by the tread grooves, a radially outer surface of each intermediate rib having a second radius of curvature; and two circumferentially extending shoulder ribs defined by the tread grooves. A radially outer surface of each shoulder rib having a third radius of curvature and a different fourth radius of curvature. The third radii each being disposed adjacent one of the tread grooves. The fourth radii each being disposed adjacent an axial outer edge of the tread. The second radii each being greater than the first radius. The third radii are greater than each of the fourth radii.

According to a preferred aspect of the tread, the first radius is greater than each of the third radii.

According to still another preferred aspect of the tread, the first radius is greater than each of the fourth radii.

According to still another preferred aspect of the tread, the second radii are greater than each of the fourth radii.

A second tire or radial tire in accordance with a preferred aspect of the present invention includes: a pair of bead cores; a carcass layer having one or more carcass plies extending from one of the bead cores to the other of the bead cores in a toroidal form; a tread portion circumferentially encircling the toroidal form of the carcass layer; and a belt structure. The belt structure has a radially innermost main belt layer, a first, unreinforced cushion layer disposed on a radially outer side of the main belt layer, a second, unreinforced cushion layer disposed on a radially outer side of the first cushion layer, and a protective belt layer disposed between a radially outer side of the second cushion layer and a radially inner side of the tread portion. The tread portion includes a plurality of circumferentially extending tread grooves, one circumferentially extending center rib defined by two of the tread grooves with a radially outer surface with a first radius of curvature, two circumferentially extending intermediate ribs defined by the tread grooves with a radially outer surface of each intermediate rib having a second radius of curvature, and two circumferentially extending shoulder ribs defined by the tread grooves. The second radii each are greater than the first radius. The third radii are greater than each of the fourth radii.

According to a preferred aspect of the second radial tire, the main belt layer has a first axial width and the protective belt layer has a second axial width, a ratio of the second axial width to the first axial width being between 0.5 and 0.90, or 0.70 and 0.90.

According to still another preferred aspect of the second radial tire, an organic fiber cord of the main belt layer includes aramid and an organic fiber cord of the protective belt layer includes nylon.

According to yet another preferred aspect of the second radial tire, a ratio of an axial width of the first cushion layer to a maximum axial width of the belt structure is between 0.5 and 1.1.

### Brief Description of the Drawings

The present invention will be described by way of example and with reference to the accompanying drawings, in which:
FIG. 1 is a schematic sectional view of an example radial tire according to the present invention.
FIG. 2 is a schematic detail view of part of the radial tire of FIG. 1.
FIG. 3 is a schematic detail view of another part of the radial tire of FIG. 1.

### Description of Example Embodiments of the Present Invention

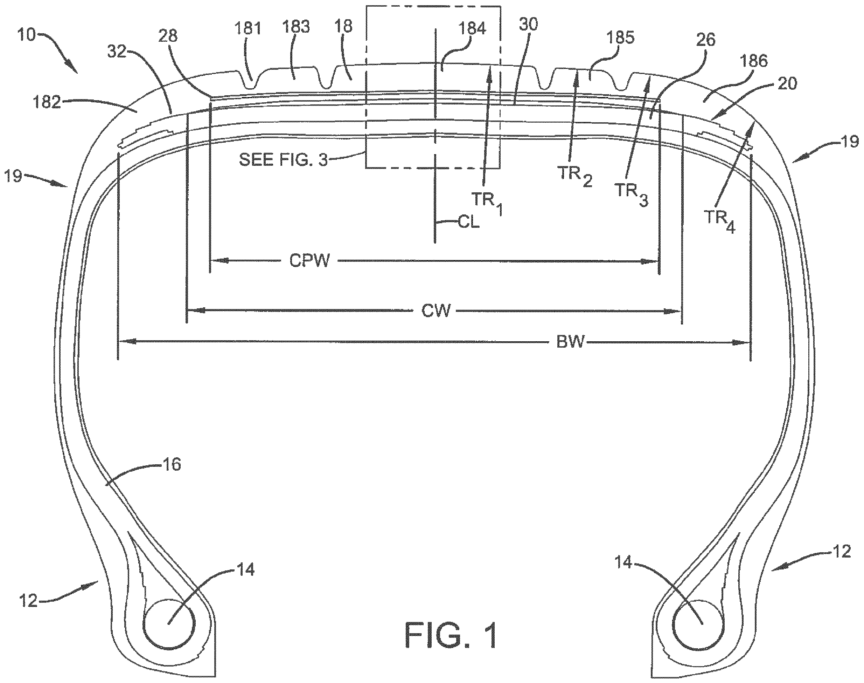

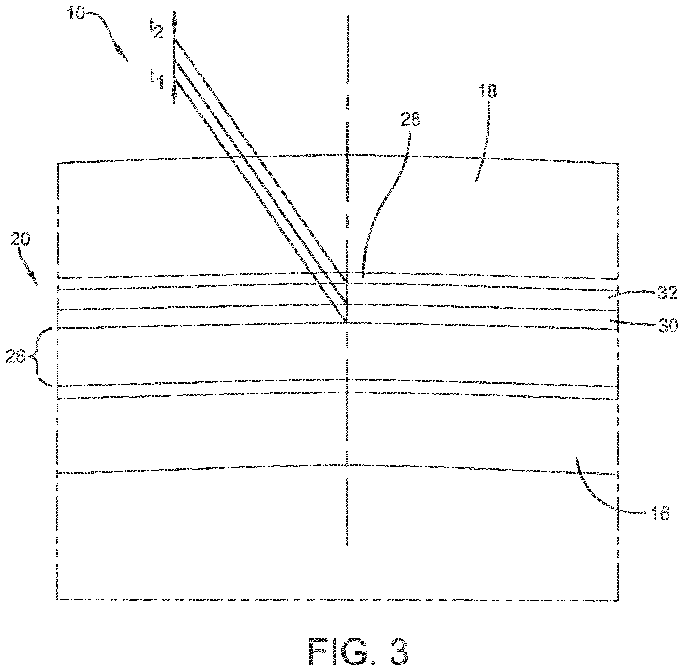

One example for carrying out the present invention will be described with reference to FIGS. 1-3 below. An example tire 10, preferably an aircraft radial tire, has a bead portion 12 with two bead cores 14, each having a preferably circular cross section. A carcass layer 16 is provided having at least one carcass ply or at least two carcass plies but preferably six or more carcass plies (not shown), in which preferably rubber-coated organic fiber cords are arranged in a radial direction forming sidewalls 19 retained by the bead cores 14. Note that other structures, such as a flipper, a chafer, a chipper, etc. similar to conventional tire may be present, which are not illustrated in FIG. 1.

The carcass layer 16 may utilize an example organic fiber cord having a tensile fracture strength of 6.3 cN/dtex or higher, an elongation percentage of 0.2 to 1.8 percent when a load is 0.2 cN/dtex in the elongating direction, an elongation percentage of 1.4 to 6.4 percent when a load is 1.0 cN/dtex in the elongating direction, and an elongation percentage of 2.1 to 8.6 percent when a load is 2.9 cN/dtex in the elongating direction.

The fiber cord of the carcass layer 16 may be for instance an aromatic polyamide fiber with an inner-layer coefficient of 0.12 to 0.85, or 0.17 to 0.51, and an outer-layer coefficient of 0.4 to 0.85.

In another embodiment, the carcass layer 16 utilizes another example organic fiber cord having a tensile fracture strength of 6.3 cN/dtex or higher, an elongation percentage of 0.2 to 2.0 percent when a load is 0.3 cN/dtex is in the elongating direction, an elongation percentage of 1.5 to 7.0 percent when a load is 2.1 cN/dtex in the elongating direction, and an elongation percentage of 2.2 to 9.3 percent when a load is 3.2 cN/dtex in the elongating direction.

The fiber cord of the carcass layer 16 may be for instance an aromatic polyamide fiber with an inner-layer coefficient of 0.12 to 0.85, or 0.17 to 0.51, and an outer-layer coefficient of 0.4 to 0.85.

The organic fiber cord of the carcass layer 16 may be a merged, or hybrid, cord including aromatic polyamide fiber and aliphatic polyamide fiber. The weight ratio of the aromatic polyamide fiber and the aliphatic polyamide fiber is preferably from 100:27 to 100:255. Additionally, nylon may be used for part or all of the merged cord.

A belt structure 20, on a radially outer side of the carcass layer 16, includes a main belt layer 26 disposed on a radially inner side of the belt structure and a protective belt layer 28 provided on a radially outer side of the belt structure 20. The belt structure 20 has a maximum overall axial width BW. The main belt layer 26 may has a first axial width, preferably the axial width BW, and the protective belt layer 28 has a second axial width CPW. The second axial width CPW is preferably smaller than the first axial width and/or preferably smaller than the maximum overall axial width BW.

The ratio of the second axial width CPW and the first axial width is preferably between 0.25 and 1.20, or between 0.75 and 0.95, such as 0.8, 0.85 or 0.9.

The main belt layer 26 is preferably formed of a plurality of belt plies, such as from 2 to 16 belt plies, preferably 4, 6 or 8. The widths of the belt plies may be the same as each other or varying widths. The inclination angle of the organic fiber cord, or cord angle, is preferably between 1 and 45 degrees, or 10 and 45 degrees, with respect to the equatorial plane CL.

The density of multiple fiber cords is preferably in a range of 4.0 cords/10 mm to 10.0 cords/10 mm, such as 7.0 cords/10 mm.

The organic fiber cord(s) of the main belt layer 26 of the belt structure 20 may be a merged, or hybrid, cord including aromatic polyamide fiber and aliphatic polyamide fiber. The weight ratio of the aromatic polyamide fiber and the aliphatic polyamide fiber is preferably from 100:27 to 100:255. Additionally, nylon may be used for part or all of the example merged cord.

In one embodiment, the protective belt layer 28 of the belt structure 20 has an axial width CPW less than the axial width BW of the belt structure 20, preferably 0.25 BW to 1.2 BW, more preferably or 0.5BW to 0.8BW.

In one embodiment, the protective belt layer 28 may be formed of one belt ply or of more belt plies.

The ply or plies of the main belt layer 26 or the ply or plies of the protective belt layer 28 may be formed with one or more organic fiber cords coated with rubber to form band-like relatively thin bodies wound such that, whenever the relatively thin bodies are wound once, or 360°, these bodies may reciprocate between both axial ends of the plies and the relatively thin bodies are preferably inclined at an angle of from 0 to 25 degrees with respect to the equatorial surface, and this winding may be carried out many times while offsetting the relatively thin bodies as substantially the same distance as their widths in the circumferential direction such that no gap is generated between the thin bodies (this is called endless zigzag-wound belt, hereinafter), as disclosed in US 2017/0253085. As a result, the fiber cord(s), extending in substantially the circumferential direction in a zigzag manner, may be embedded in the entire region of the belt ply or plies substantially uniformly by changing the bending direction at the both axial ply ends.

The angle of the preferably organic fiber cord(s) of the main belt layer 26 is preferably less than the angle of the preferably organic fiber cord(s) of the protective layer 28.

In the protective belt layer 28, the preferably organic fiber cord(s) preferably have an elastic modulus equal to or less than that of the elastic modulus of the organic fiber cords included in the main belt layer 26.

Example organic fiber cords for the protective layer 28 include an aliphatic polyamide fiber, such as nylon, or a merged cord with an aromatic polyamide fiber, such as aramid, and an aliphatic polyamide fiber, such as nylon.

In one embodiment, the protective layer 28 includes an endless zigzag-wound belt having an inclination angle of the organic fiber cord being in a range of from 0 to 25 degrees with respect to the equatorial plane CL, such as an angle of 2, 5 or 10 degrees.

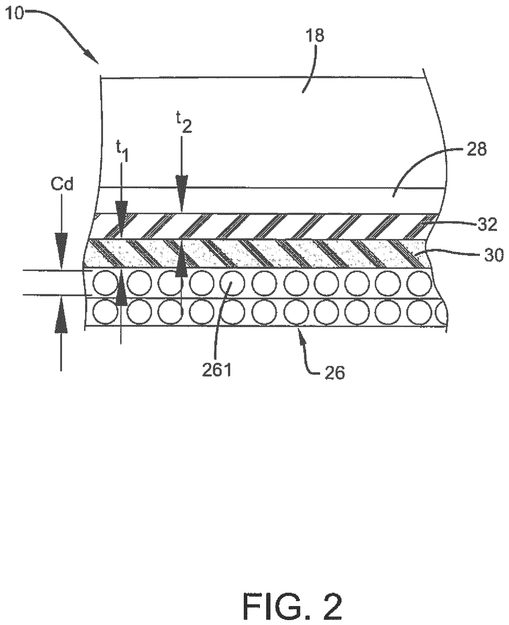

In accordance with the present invention and as shown in FIGS. 2-3, the cords 261 of the radially outermost belt ply 26 may have a specified uniform diameter C_{d}.

The minimum thickness t₁ of a first, unreinforced (e.g., lacking cord or other reinforcement) rubber layer 30, or first cushioning layer, radially between the cord(s) of the main belt layer 26 and a second, unreinforced rubber layer 32 (e.g., lacking cord or other reinforcement), or second cushioning layer, is preferably in a range of from 0.5 C_{d} to 4.0 C_{d} or from 1.0 C_{d} to 2.5 C_{d} or from 1.5 C_{d} to 2.0 C_{d}.

In one embodiment, the first rubber layer 30 has an axial width CW of from 0.5 BW to 1.1 BW or from 0.5 BW to 0.9 BW.

Preferably, the radial thickness of axially outer edges of the first unreinforced rubber layer 30 taper radially inward (FIG. 2).

Preferably, the first, unreinforced rubber layer 30 comprises multiple layers with an overall thickness within the above ranges.

Tread buffing during tire retreading may occur at the second rubber layer 32.

The minimum thickness t₂ of the second unreinforced rubber layer 32 between the first unreinforced rubber layer 30 and the protective layer 28 is preferably a range of from 1.5 C_{d} to 5.0 C_{d} or from 1.5 C_{d} to 3.5 C_{d} or from 2.9 C_{d} to 3.0 C_{d}.

The second, unreinforced rubber layer 32 preferably comprises multiple layers with an overall thickness within the above ranges.

If the thickness t₂ of the second rubber layer 32 is too small, when retreading the tire 10, it may become difficult to remove the rubber layers 32 without damaging the radially inner main belt layer 26.

Conversely, if the thickness of the unreinforced rubber layers 30, 32 is too large, not only the weight of the tire 10 increases, but also heat generation of the tread layer 18 increases, which are both disadvantageous for the performance of the tire.

The thickness t₂ of the second rubber layer 32 allows removal of the protective layer 28 during retread operations.

In accordance with the present invention, as shown in FIG 1, the tread layer 18 includes circumferentially extending tread grooves 181 separating two circumferentially extending shoulder ribs 182, 186, two circumferentially extending intermediate ribs 183, 185, and one circumferentially extending center rib 184.

The radially outermost surface of the center rib 184 has have a radius of curvature TR₁. The radially outermost surfaces of the intermediate ribs 183, 185 have radii of curvature TR₂. The radially outermost surfaces of the shoulder ribs 182, 186, adjacent the grooves 181, have a radius of curvature TR₃. The radially outermost surfaces of the shoulder ribs 182, 186, adjacent the axially outer portions of the sidewalls 19, may have a radius of curvature TR₄. TR₂ is larger than TR₁. TR₁ is preferably larger than TR₃. TR₃ is larger than TR₄. The tire 10 is preferably a radial aircraft tire.

## Claims

1. A tire, preferably a radial tire, comprising:
a pair of bead cores (14);
a carcass layer (16) having one or more carcass plies extending from one of the bead cores (14) to the other of the bead cores (14) in a toroidal form;
and a tread (18) circumferentially encircling the toroidal form of the carcass layer (16), the tread (18) comprising:
a plurality of circumferentially extending tread grooves (181);
one circumferentially extending center rib (184) defined by two of the tread grooves (181), a radially outer surface of the center rib (184) having a first radius of curvature (TR₁);
two circumferentially extending intermediate ribs (183) defined by the tread grooves (181), a radially outer surface of each intermediate rib (183) having a second radius of curvature (TR₂); and
two circumferentially extending shoulder ribs (186) defined by a respective one of said circumferentially extending tread grooves (181), a radially outer surface of each shoulder rib (186) having a third radius of curvature (TR₃) and a different fourth radius of curvature (TR₄), the third radii (TR₃) each being disposed adjacent one of the respective circumferentially extending tread grooves (181), the fourth radii (TR₄) each being disposed adjacent an axial outer edge of the tread (18), the second radii (TR₂) each being greater than the first radius (TR₁) and the third radii (TR₃) being greater than each of the fourth radii (TR₄).

2. The tire as set forth in claim 1 wherein at least one or any combination of two or three of the following statements is true for the tread (18):
(i) the first radius (TR₁) is greater than each of the third radii (TR₃);
(ii) the first radius (TR₁) is greater than each of the fourth radii (TR₄);
(iii) the second radii (TR₂) are greater than each of the fourth radii (TR₄);

3. The tire of claim 1 or 2, further comprising a belt structure (20) having a radially innermost main belt layer (26), a first, unreinforced cushion layer (30) disposed on a radially outer side of the main belt layer (26), a second, unreinforced cushion layer (32) disposed on a radially outer side of the first cushion layer (30), and a protective belt layer (28) disposed between a radially outer side of the second cushion layer (32) and a radially inner side of the tread layer (18).

4. The tire of claim 3 wherein a radially outermost layer of the main belt layer (26) has reinforcement cords (261) with a specified diameter (C_{d}), the first unreinforced cushion layer (30) having a radial thickness in a range of from 0.5 to 4.0 times the specified diameter (C_{d}).

5. The tire as set forth in claim 4 wherein the first unreinforced cushion layer (30) has a radial thickness in a range of from 0.5 to 2.5 times the specified diameter (C_{d}).

6. The tire as set forth in claim 4 wherein the first unreinforced cushion layer (30) has an axial width (CW) in a range of from 0.5 to 1.1 times or from 0.5 to 0.9 times a maximum overall axial width (BW) of the belt structure (20).

7. The tire as set forth in at least one of the previous claims 4 to 6 wherein the second unreinforced cushion layer (32) has a radial thickness in a range of from 1.5 to 5.0 times or 1.5 to 3.0 times the specified diameter (C_{d}).

8. The tire as set forth in at least one of the previous claims 4 to 7 wherein the reinforcement cords (261) of the radially outermost layer of the main belt layer (26) have a plurality of organic fiber, merged cords and/or wherein the protective belt layer (28) has organic fiber cords.

9. The tire as set forth in at least one of the previous claims 4 to 8 wherein the carcass layer (16) has organic fiber cords.

10. The tire as set forth in at least one of the previous claims 4 to 9 wherein the main belt layer (26) has a first axial width (BW) and the protective belt layer (28) has a second axial width (CPW), the ratio of the second axial width to the first axial width being in a range of from 0.25 to 1.20.

11. The tire as set forth in claim 3 wherein the main belt layer (26) has a first axial width (BW) and the protective belt layer (28) has a second axial width (CPW), the ratio of the second axial width (CPW) to the first axial width (BW) being in a range of from 0.50 to 0.90.

12. The tire as set forth in at least one of the previous claims wherein an organic fiber cord of the main belt layer (26) includes aramid and an organic fiber cord of the protective belt layer (28) includes nylon.

13. The tire as set forth in at least one of the previous claims wherein the tire (10) is a radial aircraft tire.

## Patentansprüche

1. Reifen, vorzugsweise ein Radialreifen, der Folgendes umfasst:
ein Paar Wulstkerne (14);
eine Karkassenschicht (16), die eine oder mehrere Karkassenlagen aufweist, die sich von einem der Wulstkerne (14) zu dem anderen der Wulstkerne (14) in einer toroidalen Form erstrecken;
und eine Lauffläche (18), die die toroidale Form der Karkassenschicht (16) in Umfangsrichtung umgibt, wobei die Lauffläche (18) Folgendes umfasst:
mehrere sich in Umfangsrichtung erstreckende Laufflächenrillen (181);
eine sich in Umfangsrichtung erstreckende Mittelrippe (184), die durch zwei der Laufflächenrillen (181) definiert ist, wobei eine radial äußere Oberfläche der Mittelrippe (184) einen ersten Krümmungsradius (TR₁) aufweist;
zwei sich in Umfangsrichtung erstreckende Zwischenrippen (183), die durch die Laufflächenrillen (181) definiert sind, wobei eine radial äußere Oberfläche jeder Zwischenrippe (183) einen zweiten Krümmungsradius (TR₂) aufweist; und
zwei sich in Umfangsrichtung erstreckende Schulterrippen (186), die durch eine jeweilige der sich in Umfangsrichtung erstreckenden Laufflächenrillen (181) definiert sind, wobei eine radial äußere Oberfläche jeder Schulterrippe (186) einen dritten Krümmungsradius (TR₃) und einen unterschiedlichen vierten Krümmungsradius (TR₄) aufweist, wobei die dritten Radien (TR₃) jeweils benachbart zu einer der jeweiligen sich in Umfangsrichtung erstreckenden Laufflächenrillen (181) angeordnet sind, die vierten Radien (TR₄) jeweils benachbart zu einer axialen Außenkante der Lauffläche (18) angeordnet sind, die zweiten Radien (TR₂) jeweils größer als der erste Radius (TR₁) sind und die dritten Radien (TR₃) größer als jeder der vierten Radien (TR₄) sind.

2. Reifen nach Anspruch 1, wobei wenigstens eine oder eine beliebige Kombination von zwei oder drei der folgenden Aussagen auf die Lauffläche (18) zutrifft:
(i) der erste Radius (TR₁) ist größer als jeder der dritten Radien (TR₃);
(ii) der erste Radius (TR₁) ist größer als jeder der vierten Radien (TR₄);
(iii) die zweiten Radien (TR₂) sind größer als jeder der vierten Radien (TR₄);

3. Reifen nach Anspruch 1 oder 2, der ferner eine Gürtelstruktur (20) umfasst, die eine radial innerste Hauptgürtelschicht (26), eine erste, unverstärkte Dämpfungsschicht (30), die auf einer radial äußeren Seite der Hauptgürtelschicht (26) angeordnet ist, eine zweite, unverstärkte Dämpfungsschicht (32), die auf einer radial äußeren Seite der ersten Dämpfungsschicht (30) angeordnet ist, und eine Schutzgürtelschicht (28) aufweist, die zwischen einer radial äußeren Seite der zweiten Dämpfungsschicht (32) und einer radial inneren Seite der Laufflächenschicht (18) angeordnet ist.

4. Reifen nach Anspruch 3, wobei eine radial äußerste Schicht der Hauptgürtelschicht (26) Verstärkungskorde (261) mit einem spezifizierten Durchmesser (C_{d}) aufweist, wobei die erste unverstärkte Dämpfungsschicht (30) eine radiale Dicke in einem Bereich des 0,5- bis 4,0-fachen des spezifizierten Durchmessers (C_{d}) aufweist.

5. Reifen nach Anspruch 4, wobei die erste unverstärkte Dämpfungsschicht (30) eine radiale Dicke in einem Bereich des 0,5- bis 2,5-fachen des spezifizierten Durchmessers (C_{d}) aufweist.

6. Reifen nach Anspruch 4, wobei die erste unverstärkte Dämpfungsschicht (30) eine axiale Breite (CW) in einem Bereich des 0,5- bis 1,1-fachen oder des 0,5- bis 0,9-fachen einer maximalen axialen Gesamtbreite (BW) der Gürtelstruktur (20) aufweist.

7. Reifen nach wenigstens einem der vorhergehenden Ansprüche 4 bis 6, wobei die zweite unverstärkte Dämpfungsschicht (32) eine radiale Dicke in einem Bereich des 1,5- bis 5,0-fachen oder des 1,5- bis 3,0-fachen des spezifizierten Durchmessers (C_{d}) aufweist.

8. Reifen nach wenigstens einem der vorhergehenden Ansprüche 4 bis 7, wobei die Verstärkungskorde (261) der radial äußersten Schicht der Hauptgürtelschicht (26) mehrere verschmolzene Korde aus organischen Fasern aufweisen und/oder wobei die Schutzgürtelschicht (28) Korde aus organischen Fasern aufweist.

9. Reifen nach wenigstens einem der vorhergehenden Ansprüche 4 bis 8, wobei die Karkassenschicht (16) Korde aus organischen Fasern aufweist.

10. Reifen nach wenigstens einem der vorhergehenden Ansprüche 4 bis 9, wobei die Hauptgürtelschicht (26) eine erste axiale Breite (BW) aufweist und die Schutzgürtelschicht (28) eine zweite axiale Breite (CPW) aufweist, wobei das Verhältnis der zweiten axialen Breite zu der ersten axialen Breite in einem Bereich von 0,25 bis 1,20 liegt.

11. Reifen nach Anspruch 3, wobei die Hauptgürtelschicht (26) eine erste axiale Breite (BW) aufweist und die Schutzgürtelschicht (28) eine zweite axiale Breite (CPW) aufweist, wobei das Verhältnis der zweiten axialen Breite (CPW) zu der ersten axialen Breite (BW) in einem Bereich von 0,50 bis 0,90 liegt.

12. Reifen nach wenigstens einem der vorhergehenden Ansprüche, wobei ein Kord aus organischen Fasern der Hauptgürtelschicht (26) Aramid einschließt und ein Kord aus organischen Fasern der Schutzgürtelschicht (28) Nylon einschließt.

13. Reifen nach wenigstens einem der vorhergehenden Ansprüche, wobei der Reifen (10) ein radialer Luftfahrzeugreifen ist.

## Revendications

1. Bandage pneumatique, de préférence bandage pneumatique du type à nappe radiale, qui comprend :
une paire de tringles de talons (14) ;
une couche de carcasse (16) qui possède une ou plusieurs nappes de carcasse qui s'étendent à partir d'une tringle de talon parmi les tringles de talons (14) jusqu'à l'autre tringle de talon parmi les tringles de talons (14) sous une forme toroïdale ;
et une bande de roulement (18) qui encercle, dans la direction circonférentielle, la forme toroïdale de la couche de carcasse (16), la bande de roulement (18) comprenant :
un certain nombre de rainures de la bande de roulement (181) qui s'étendent dans la direction circonférentielle ;
une nervure centrale (184), qui s'étend dans la direction circonférentielle, qui est définie par deux des rainures de la bande de roulement (181), une surface externe, dans la direction radiale, de la nervure centrale (184) possédant un premier rayon de courbure (TR₁) ;
deux nervures intermédiaires (183) qui s'étendent dans la direction circonférentielle, qui sont définies par les rainures de la bande de roulement (181), une surface externe, dans la direction radiale, de chaque nervure intermédiaire (183) possédant un deuxième rayon de courbure (TR₂) ; et
deux nervures d'épaulement (186), qui s'étendent dans la direction circonférentielle, qui sont définies par une rainure respective parmi lesdites rainures de bande de roulement (181) qui s'étendent dans la direction circonférentielle, une surface externe, dans la direction radiale, de chaque nervure d'épaulement (186) possédant un troisième rayon de courbure (TR₃) et un quatrième rayon de courbure différent (TR₄), les troisièmes rayons (TR₃) étant chacun disposés en position adjacente à une des rainures de bande de roulement respectives (181) qui s'étendent dans la direction circonférentielle, les quatrièmes rayons (TR₄) étant chacun disposés en position adjacente à un bord axial externe de la bande de roulement (18), chacun desdits deuxièmes rayons (TR₂) étant supérieur au premier rayon (TR₁) et les troisièmes rayons (TR₃) étant supérieurs à chacun des quatrièmes rayons (TR₄).

2. Bandage pneumatique tel qu'il est indiqué dans la revendication 1, dans lequel au moins une des affirmations suivantes ou une quelconque combinaison de deux ou de trois affirmations parmi les affirmations indiquées ci-dessous est/sont vraie(s) pour la bande de roulement (18) :
(i) le premier rayon (TR₁) est supérieur à chacun des troisièmes rayons (TR₃) ;
(ii) le premier rayon (TR₁) est supérieur à chacun des quatrièmes rayons (TR₄) ;
(iii) les deuxièmes rayons (TR₂) sont supérieurs à chacun des quatrièmes rayons (TR₄).

3. Bandage pneumatique conformément à la revendication 1 ou 2, qui comprend en outre une structure de ceintures (20) qui possède une couche de ceinture principale (26) la plus interne dans la direction radiale, une première couche d'amortissement non renforcée (30) qui est disposée sur un côté externe, dans la direction radiale, de la couche de ceinture principale (26), une deuxième couche d'amortissement non renforcée (32) qui est disposée sur un côté externe, dans la direction radiale, de la première couche d'amortissement non renforcée (30), et une couche de ceinture de protection (28) qui est disposée entre un côté externe, dans la direction radiale, de la deuxième couche d'amortissement (32) et un côté interne, dans la direction radiale, de la couche faisant office de bande de roulement (18).

4. Bandage pneumatique conformément à la revendication 3, dans lequel une couche la plus externe, dans la direction radiale, de la couche de ceinture principale (26) possède des câblés de renforcement (261) qui possèdent un diamètre spécifié (C_{d}), la première couche d'amortissement non renforcée (30) possédant une épaisseur radiale qui se situe dans une plage qui représente de 0,5 à 4,0 fois le diamètre spécifié (C_{d}).

5. Bandage pneumatique tel qu'il est indiqué dans la revendication 4, dans lequel la première couche d'amortissement non renforcée (30) possède une épaisseur radiale qui se situe dans une plage qui représente de 0,5 à 2,5 fois le diamètre spécifié (C_{d}).

6. Bandage pneumatique tel qu'il est indiqué dans la revendication 4, dans lequel la première couche d'amortissement non renforcée (30) possède une largeur axiale (CW) qui se situe dans une plage qui représente de 0,5 à 1,1 fois ou de 0,5 à 0,9 fois une largeur axiale globale maximale (BW) de la structure de ceintures (20).

7. Bandage pneumatique tel qu'il est indiqué dans au moins une des revendications précédentes 4 à 6, dans lequel la deuxième couche d'amortissement non renforcée (32) possède une épaisseur radiale qui se situe dans une plage qui représente de 1,5 à 5,0 fois ou de 1,5 à 3,0 fois le diamètre spécifié (C_{d}).

8. Bandage pneumatique tel qu'il est indiqué dans au moins une des revendications précédentes 4 à 7, dans lequel les câblés de renforcement (261) de la couche la plus externe, dans la direction radiale, de la couche de ceinture principale (26) possèdent un certain nombre de câblés fusionnés à base de fibres organiques ; et/ou dans lequel la couche de ceinture de protection (28) possède des câblés à base de fibres organiques.

9. Bandage pneumatique tel qu'il est indiqué dans au moins une des revendications précédentes 4 à 8, dans lequel la couche de carcasse (16) possède des câblés à base de fibres organiques.

10. Bandage pneumatique tel qu'il est indiqué dans au moins une des revendications précédentes 4 à 9, dans lequel la couche de ceinture principale (26) possède une première largeur axiale (BW) et la couche de ceinture de protection (28) possède une deuxième largeur axiale (CPW), le rapport entre la deuxième largeur axiale et la première largeur axiale se situant dans une plage allant de 0,25 à 1,20.

11. Bandage pneumatique tel qu'il est indiqué dans la revendication 3, dans lequel la couche de ceinture principale (26) possède une première largeur axiale (BW) et la couche de ceinture de protection (28) possède une deuxième largeur axiale (CPW), le rapport entre la deuxième largeur axiale (CPW) et la première largeur axiale (BW) se situant dans une plage allant de 0,50 à 0,90.

12. Bandage pneumatique tel qu'il est indiqué dans au moins une des revendications précédentes, dans lequel un câblé à base de fibres organiques de la couche de ceinture principale (26) englobe de l'aramide et un câblé à base de fibres organiques de la couche de ceinture de protection (28) englobe du nylon.

13. Bandage pneumatique tel qu'il est indiqué dans au moins une des revendications précédentes, dans lequel le bandage pneumatique (10) représente un bandage pneumatique du type à nappe radiale qui est destiné à un aéroplane.
